# EUROPÄISCHE PATENTANMELDUNG

(11) **EP 2 949 463 A1**
(43) Veröffentlichungstag der Anmeldung: **02.12.2015**
(21) Anmeldenummer: 14170271.2
(22) Anmeldetag: 28.05.2014
(51) Int. Cl.: B32B 17/06, B32B 17/10, C03C 27/12

(54) **Brandschutzscheibe und Brandschutzverglasung**

(71) Anmelder: Saint-Gobain Glass France, 92400 Courbevoie (FR)
(72) Erfinder: Gelderie, Udo, 52146 Würselen (DE); Schwankhaus, Norbert, 52499 Baesweiler (DE); Te Strake, David, 52070 Aachen (DE)
(74) Vertreter: Frei Patent Attorneys

(57) **Zusammenfassung**

Die vorliegende Erfindung betrifft eine Brandschutzscheibe (10), umfassend:
- mindestens eine Floatglasscheibe (1.1) mit einer Atmosphärenseite (I) und einer Zinnbadseite (II),
- mindestens eine Schutzschicht (3.1), die auf der Atmosphärenseite (I) und/oder der Zinnbadseite (II) flächig angeordnet ist und
- mindestens eine Brandschutzschicht (2.1), die auf der Schutzschicht (3.1) flächig angeordnet ist,

wobei die Schutzschicht (3.1) eine mehrlagige Schichtstruktur ist und eine erste Teilschutzschicht (3.1a) aus Metall-dotiertem Siliziumnitrid, und eine zweite Teilschutzschicht (3.1 b) aus einem Zinn-Zinkoxid oder einem dotierten Zinn-Zinkoxid, enthält oder daraus besteht.

## Beschreibung

Die Erfindung betrifft eine Brandschutzscheibe, insbesondere für eine Brandschutzverglasung, mit einer Schutzschicht zur Verminderung der Trübung der Scheibe bei Alterung. Des Weiteren betrifft die Erfindung ein Verfahren zur Herstellung einer solchen Brandschutzverglasung und deren Verwendung.

Brandschutzverglasungen sind in verschiedenen Ausführungsformen bekannt und werden beispielsweise im Baubereich eingesetzt. Sie bestehen in der Regel aus mindestens zwei transparenten Trägerelementen, wie zwei Glasscheiben, zwischen denen eine Brandschutzschicht aus einen transparenten, intumeszenten Material angeordnet ist. Aus der EP 0 620 781 B1 ist beispielsweise eine Brandschutzschicht aus einem wasserhaltigen Alkalisilikat bekannt. Bei Einwirkung von Hitze auf die Brandschutzverglasung verdampft das in der Alkalisilikat-Schicht enthaltende Wasser und das Alkalisilikat schäumt auf. Die Transparenz der Brandschutzschicht ist dann insbesondere für Wärmestrahlung stark reduziert und schützt für eine gewisse Zeit vor unerwünschtem Wärmedurchgang. Die große Ausdehnung der Brandschutzschicht führt in der Regel zum Zersplittern einer der Glasscheiben und insbesondere zum Zersplittern der der Brandquelle zugewandten Glasscheibe. Zur Verbesserung des Hitzeschutzes und der mechanischen Stabilität, werden deshalb mehrere Glasscheiben mit dazwischenliegenden Brandschutzschichten hintereinander angeordnet.

Weitere, verbesserte Brandschutzschichten auf Basis von Alkalisilikat mit einem besonders hohen Wasseranteil von 80% bis 90 % sind beispielsweise aus EP 0 192 249 A2 bekannt.

Brandschutzscheibe und Brandverglasungen mit derartigen Brandschutzschichten zeigen oft im Laufe der Zeit punktuelle oder bereichsweise Trübungen im sichtbaren Bereich.

Die Aufgabe der vorliegenden Erfindung besteht nunmehr darin, eine Brandschutzscheibe bereitzustellen, die eine verbesserte Alterungsbeständigkeit und insbesondere eine verringerte Trübung während der Alterung aufweist. Diese und weitere Aufgaben werden nach dem Vorschlag der Erfindung durch eine Brandschutzscheibe mit den Merkmalen der unabhängigen Patentansprüche gelöst. Vorteilhafte Ausgestaltungen der Erfindung sind durch die Merkmale der Unteransprüche angegeben.

Ein Verfahren zur Herstellung einer Brandschutzverglasung sowie die Verwendung einer Brandschutzscheibe gehen aus weiteren unabhängigen Patentansprüchen hervor.

Eine erfindungsgemäße Brandschutzscheibe umfasst
- mindestens eine Floatglasscheibe mit einer Atmosphärenseite und einer Zinnbadseite,
- mindestens eine Schutzschicht, die auf der Atmosphärenseite und/oder der Zinnbadseite der Floatglasscheibe flächig angeordnet ist und
- mindestens eine Brandschutzschicht, die auf der Schutzschicht flächig angeordnet ist,
wobei die Schutzschicht eine mehrlagige Schichtstruktur ist und eine erste Teilschutzschicht aus Metall-dotiertem Siliziumnitrid, und eine zweite Teilschutzschicht aus Zinn-Zinkoxid oder dotiertem Zinn-Zinkoxid, enthält oder daraus besteht.

In einer vorteilhaften Ausgestaltung der erfindungsgemäßen Brandschutzscheibe ist die Schutzschicht zweilagig ausgebildet.

Dass die Schutzschicht flächig angeordnet bedeutet hier, dass die Floatglasscheibe auf ihrer im Wesentlichen gesamten Atmosphärenseite oder Zinnbadseite angeordnet ist. Im Wesentlichen bedeutet hier, dass mindestens 70% und bevorzugt mindestens 85% und insbesondere mindestens 95% der jeweiligen Seite mit der Schutzschicht bedeckt sind. Gleiches gilt für eine flächige Anordnung der Brandschutzschicht auf der Schutzschicht. Insbesondere ist die Schutzschicht auf der jeweiligen Seite der Floatglasscheibe derart angeordnet, dass die Brandschutzschicht nur über die Schutzschicht und nicht direkt mit der Floatglasscheibe in Kontakt ist.

Die vorliegende Erfindung beruht auf der Erkenntnis der Erfinder, dass je nach Glasqualität manche Floatglasscheiben, die mit ihrer Zinnbadseite in Kontakt mit der Brandschutzschicht waren, im Alterungstest eine deutliche Trübung der Durchsicht durch die Anordnung aus Floatglasscheibe und Brandschutzschicht zeigten. Dagegen zeigte sich bei Floatglasscheiben, die mit ihrer Atmosphärenseite in Kontakt mit der Brandschutzschicht angeordnet waren, im Alterungstest keine oder nur eine geringe Trübung der Durchsicht. Durch das Einbringen einer erfindungsgemäßen Schutzschicht zwischen der Zinnbadseite der Floatglasscheibe und der Brandschutzschicht konnte im Alterungstest eine Trübung der Durchsicht vermieden oder deutlich reduziert werden.

Die Erfindung kann in folgendem Modell verstanden werden: Bei der Herstellung ist die Zinnbadseite der heißen Floatglasscheibe in Kontakt mit dem Zinnbad. Dies führt zur Ausbildung einer Oberfläche, die bei Kontakt mit einer typischerweise alkalischen Brandschutzschicht je nach Morphologie der Zinnschicht inhomogene, streifenförmige Trübungen und nach Alterung ein trübes Erscheinen bekommen kann. Die Atmosphärenseite der Floatglasscheibe zeigt bei Kontakt mit der alkalischen Brandschutzschicht nur eine geringe und kaum wahrnehmbare, homogene Trübung, die zu keiner oder nur zu einer geringen streifenförmigen Trübung führt. Durch Einbringen der erfindungsgemäßen Schutzschicht wird die streifenförmige Trübung der Zinnbadseite bei Kontakt mit der alkalischen Brandschutzschicht verringert und homogenisiert, so dass ähnlich zur Atmosphärenseite keine oder nur eine geringe und kaum wahrnehmbare, homogene Trübung sichtbar ist.

In einer vorteilhaften Ausgestaltung der erfindungsgemäßen Brandschutzscheibe ist die Schutzschicht nur auf der Zinnbadseite der Floatglasscheibe flächig angeordnet und nicht auf der Atmosphärenseite.

In einer vorteilhaften Ausgestaltung der erfindungsgemäßen Brandschutzscheibe ist die Brandschutzschicht alkalisch.

Die erfindungsgemäße Brandschutzschicht enthält vorteilhafterweise Alkalisilikat oder Alkali-Polysilikat und bevorzugt Alkalisilikat-Wasserglas. Derartige Brandschutzschichten sind beispielsweise aus EP 0 620 781 B1 oder EP 0 192 249 A2 bekannt. Alternative Brandschutzschichten enthalten Alkaliphosphat, Alkaliwolframat und/oder Alkalimolydat, wie aus DE 35 30 968 C2 bekannt ist.

Weitere alternative Brandschutzschichten enthalten ein Hydrogel mit einer festen Phase aus einem Polymere und bevorzugt aus Polyacrylamid oder N-Methyloacrylamid, wie aus der DE 27 13 849 C2 bekannt ist, oder polymerisiertes 2-Hydroxy-3-methacryloxypropyltrimethylammonium-chlorid, wie aus DE 40 01 677 C1 bekannt ist.

Die Dicke der Brandschutzschichten kann weit variieren und den jeweiligen Anforderungen des Verwendungszwecks angepasst werden. Vorteilhafte Brandschutzschichten weisen bei Silikaten eine Dicke h von 0,5 mm bis 7 mm und bevorzugt von 1 mm bis 6 mm auf. Bei Hydrogelen liegen die Dicken zwischen 8 mm und 70 mm.

Die zweite Teilschutzschicht enthält erfindungsgemäß zumindest ein Zinn-Zinkoxid oder ein dotiertes Zinn-Zinkoxid. Das Zinn-Zinkoxid oder das dotierte Zinn-Zinkoxid ist vorteilhafterweise nichtkristallin. Es kann bevorzugt amorph oder teilamorph (und damit teilkristallin) sein, ist aber nicht vollständig kristallin. Eine derartige nichtkristalline zweite Teilschutzschicht hat den besonderen Vorteil, dass sie eine geringe Rauheit aufweist und somit eine vorteilhaft glatte Oberfläche für die oberhalb der zweiten Teilschutzschicht aufzubringenden Schichten bildet, wobei Kratzer und Punktdefekte aufgefüllt sind.

In einer vorteilhaften Ausgestaltung der erfindungsgemäßen Brandschutzscheibe enthält die zweite Teilschutzschicht Dotierungen, beispielsweise von Antimon, Fluor, Bor, Silber, Ruthenium, Palladium, Aluminium und Tantal. Der Anteil der Dotierung am metallischen Anteil der Schutzschicht in Gewichtsprozent (Gew.-%) beträgt bevorzugt von 0,01 Gew.-% bis 10 Gew.-%, besonders bevorzugt von 0,1 Gew.-% bis 5 Gew.-% und insbesondere von 0,5 Gew.-% bis 2,5 Gew.-%. Brandschutzscheiben mit zweiten Teilschutzschichten, die eine derartige Dotierung aufweisen, zeigten besonders geringe Trübungen während der Alterung. Als besonders geeignet haben sich dabei Antimon-dotierte Zinn-Zinkoxidschichten erwiesen.

In einer vorteilhaften Ausgestaltung der erfindungsgemäßen Brandschutzscheibe enthält die zweite Teilschutzschicht ein Verhältnis von Zink:Zinn von 5 Gew.-%: 95 Gew.-% bis 95 Gew.-%: 5 Gew.-% und bevorzugt von 15 Gew.-%: 85 Gew.-% bis 70 Gew.-%: 30 Gew.-%. Schutzschichten aus Zinn-Zinkoxid oder dotiertem Zinn-Zinkoxid mit derartigen Mischungsverhältnissen sind besonders beständig und zeigen besonders geringe Trübungen während der Alterung.

In einer vorteilhaften Ausgestaltung der erfindungsgemäßen Brandschutzscheibe enthält die zweite Teilschutzschicht SnₓZn_{y}O_{z} oder dotiertes SnₓZn_{y}O_{z} mit 0 < z ≤ (y+2x) und bevorzugt 0,7*(y+2x) ≤ z ≤ (y+2x) und besonders bevorzugt 0,9*(y+2x) ≤ z ≤ (y+2x). Brandschutzscheiben mit zweiten Teilschutzschichten mit derartigen Mischungsverhältnissen sind besonders beständig und zeigen besonders geringe Trübungen während der Alterung. In einer besonders vorteilhaften Ausgestaltung der erfindungsgemäßen Brandschutzscheibe enthält die zweite Teilschutzschicht ZnSnO₃, dotiertes ZnSnO₃, Zn₂SnO₄ oder dotiertes Zn₂SnO₄ oder Gemische davon. Zweite Teilschutzschichten mit derartigen Mischungsverhältnissen sind besonders beständig und zeigen besonders geringe Trübungen während der Alterung.

In einer vorteilhaften Ausgestaltung der erfindungsgemäßen Brandschutzscheibe besteht die zweite Teilschutzschicht aus Zinn-Zinkoxid sowie gegebenenfalls aus einem Dotiermetall und herstellungsbedingten Beimengungen. Zweite Teilschutzschichten mit derartigen Mischungsverhältnissen sind besonders beständig und zeigen besonders geringe Trübungen während der Alterung.

Die Abscheidung des Zinn-Zink-Mischoxids erfolgt beispielsweise unter Zugabe von Sauerstoff als Reaktionsgas während der Kathodenzerstäubung.

In einer vorteilhaften Ausgestaltung einer erfindungsgemäßen zweiten Teilschutzschicht beträgt die Schichtdicke d_{b} der zweiten Teilschutzschicht von 2 nm bis 200 nm, bevorzugt von 10 nm bis 50 nm und besonders bevorzugt von 13 nm bis 21 nm. Brandschutzscheiben mit zweiten Teilschutzschicht mit diesen Schichtdicken zeigten besonders geringe Trübungen während der Alterung.

Die erste Teilschutzschicht enthält erfindungsgemäß zumindest ein Metall-dotiertes Siliziumnitrid. Das Dotierungsmetall ist bevorzugt Antimon, Silber, Ruthenium, Palladium, Aluminium und/oder Tantal. Die besten Ergebnisse mit besonders geringen Trübungen während der Herstellung im Korrosionstest und im Kratzertest konnten mit Aluminium-dotierten Siliziumnitrid-Schichten erzielt werden.

In einer vorteilhaften Ausgestaltung der erfindungsgemäßen Brandschutzscheibe beträgt der Anteil des Dotierungsmetalls und insbesondere des Aluminium an der ersten Teilschutzschicht von 1 Gew.-% bis 20 Gew.-% und bevorzugt von 3 Gew.-% bis 7 Gew.-%. Brandschutzscheiben mit derartige ersten Teilschutzschichten zeigten die besten Beständigkeiten im Korrosionstest und im Kratzertest.

In einer weiteren vorteilhaften Ausgestaltung der erfindungsgemäßen Brandschutzscheibe beträgt die Schicht dicke dₐ der ersten Teilschutzschicht von von 2 nm bis 200 nm, bevorzugt von 5 nm bis 50 nm, besonders bevorzugt von 5 nm bis 25 nm und insbesondere von 8 nm bis 13 nm. Brandschutzscheiben mit derartige ersten Teilschutzschichten zeigten die besten Beständigkeiten und geringsten Trübungen im Korrosionstest und im Kratzertest.

In einer vorteilhaften Ausgestaltung der erfindungsgemäßen Brandschutzscheibe besteht die erste Teilschutzschicht aus Metall-dotiertem und insbesondere aus Aluminium-dotiertem Siliziumnitrid sowie herstellungsbedingten Beimengungen.

Wie Untersuchungen der Erfinder ergaben hat eine zweilagige Schutzschicht mit einer Teilschutzschicht aus einem Metall-dotiertem Siliziumnitrid den Vorteil, dass die zweite Teilschutzschicht aus Zinn-Zinkoxid oder dotiertem Zinn-Zinkoxid dünner ausgebildet sein kann als bei einer einlagen Schutzschicht aus Zinn-Zinkoxid oder dotiertem Zinn-Zinkoxid. Derartige zweilagige Schutzschichten sind dennoch besonders beständig gegen alkalische Brandschutzschichten und zeigen geringe Trübungen während des Alterns sowie sehr gute Beständigkeiten im Korrosionstest und im Kratzertest.

Eine synergetische Wechselwirkung einer Metall-dotierten Siliziumnitridschicht mit der Zinn-Zinkoxidschicht beziehungsweise der dotierten Zinn-Zinkoxidschicht ermöglicht es sogar, dass die zweite Teilschutzschicht aus Zinn-Zinkoxid beziehungsweise dotiertem Zinn-Zinkoxid derart verringert werden kann, dass die Gesamtschichtdicke der zweilagigen Schutzschicht geringer gewählt werden kann als bei einer Schutzschicht aus einer Monologe aus Zinn-Zinkoxid beziehungsweise dotiertem Zinn-Zinkoxid, bei gleichbleibend guter Beständigkeit gegen die Brandschutzschicht. Eine Verringerung der Gesamtschichtdicke der Schutzschicht kann zu einer Verbesserung der optischen Eigenschaften der Brandschutzscheibe führen, wie zu einer erhöhten Transparenz und einer geringeren Farbabweichung. Metall-dotierte Siliziumnitridschichten sind prozesstechnisch sehr leicht und kostengünstig herzustellen, und haben eine hohe optische Transparenz. Insbesondere sind Metall-dotierte Siliziumnitridschichten kostengünstiger herzustellen als Zinn-Zinkoxid-Schichten.

In einer vorteilhaften Ausgestaltung ist die erste Teilschutzschicht aus Metall-dotiertem Siliziumnitrid unmittelbar auf der Zinnbadseite der Floatglasscheibe angeordnet und die zweite Teilschutzschicht aus Zinn-Zinkoxid oder dotiertem Zinn-Zinkoxid auf der ersten Teilsschutzschicht angeordnet. Mit derartigen Schichtfolgen konnten die besten Ergebnisse erzielt werden. Es versteht sich, dass die Reihenfolge der Materialien aber auch vertauscht sein kann, so dass die zweite Teilschutzschicht unmittelbar auf der Zinnbadseite der Floatglasscheibe angeordnet ist und die erste Teilschutzschicht aus Metall-dotiertem Siliziumnitrid auf der zweiten Teilschutzschicht angeordnet ist.

Die erfindungsgemäße Floatglasscheibe ist in einem Floatverfahren hergestellt. Derartige Verfahren sind beispielsweise aus FR 1 378 839 A bekannt. Bei der Floatglasherstellung wird in einen kontinuierlichen Prozess eine teigig-flüssige Glasschmelze fortlaufend von einer Seite auf ein längliches Bad aus flüssigem Zinn geleitet. Die Glasschmelze schwimmt (engl. to float) auf dem Zinnbad und es breitet sich ein gleichmäßiger Glasfilm aus. Durch die Oberflächenspannungen des Zinns und des flüssigen Glases bildet sich eine sehr glatte Glasoberfläche. Am hinteren Ende des Zinnbades wird die Glasschmelze heruntergekühlt und erstarrt. In Rahmen der vorliegenden Erfindung wird die Seite der Floatglasscheibe, die bei der Herstellung auf dem Zinnbad aufschwimmt als Zinnbadseite bezeichnet. Die der Zinnbadseite gegenüberliegende Seite der Floatglasscheibe wird als Atmosphärenseite bezeichnet.

Die Floatglasscheibe enthält oder besteht bevorzugt aus Boro-Silikatglas, Alumo-Silikatglas oder Erdalkali-Silikatglas und besonders bevorzugt aus Kalk-Natron-Glas und insbesondere Kalk-Natron-Glas gemäß der Norm EN 572-1:2004.

Die Floatglasscheibe ist vorteilhafterweise thermisch vorgespannt oder teilvorgespannt. Die thermisch teilvorgespannte oder vorgespannte Floatglasscheibe hat bevorzugt eine Vorspannung von 30 MPa bis 200 MPa und besonders bevorzugt von 70 MPa bis 200 MPa. Derartige vorgespannte oder teilvorgespannte Floatglasscheiben sind beispielsweise aus DE 197 10 289 C1 bekannt. Thermisch vorgespannte oder teilvorgespannte Floatglasscheiben sind auf Grund ihrer höheren Stabilität für Brandschutzscheiben besonders geeignet und die erfindungsgemäße Wirkung der Schutzschicht ist besonders vorteilhaft.

Die Dicke der Floatglasscheibe kann breit variieren und so hervorragend den Erfordernissen des Einzelfalls angepasst werden. Vorzugsweise werden Scheiben mit den Standardstärken von 1 mm bis 25 mm und bevorzugt von 2 mm bis 12 mm verwendet. Die Größe der Scheibe kann breit variieren und richtet sich nach der Größe der erfindungsgemäßen Verwendung.

Die Floatglasscheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt ist die Scheibe planar oder leicht oder stark in eine Richtung oder in mehrere Richtungen des Raumes gebogen. Die Floatglasscheibe kann farblos oder gefärbt sein.

Die erfindungsgemäße Floatglasscheibe kann aus einem Verbund von zwei oder mehreren einzelnen Floatglasscheiben bestehen, die jeweils über mindestens eine Zwischenschicht miteinander verbunden sind. Die Zwischenschicht enthält vorzugsweise einen thermoplastischen Kunststoff, wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

In einer vorteilhaften Ausgestaltung der erfindungsgemäßen Brandschutzscheibe ist zwischen der Schutzschicht und der Brandschutzschicht mindestens eine Haftverbesserungsschicht oder eine Haftverminderungsschicht angeordnet ist. Die Haftverbesserungsschicht enthält beispielsweise organisch hydrophile Substanzen auf der Basis von Silanen, Titanaten oder Zirkonaten und ist beispielsweise aus EP 0 001 531 B1 und EP 0 590 978 A1 bekannt. Haftverminderungsschichten enthalten beispielsweise hydrophobe organofunktionelle Silane wie Fluoralkylsilane, Perfluoralkylsilane, Fluoralkyltrichlorsilane, Fluoralkylalkoxysilane, Perfluoralkylalkoxysilane, Fluoraliphatische Silylether, Alkylsilane und Phenylsilane und Silikone. Derartige hydrophobe organofunktionelle Silane sind beispielsweises aus DE 197 31 416 C1 bekannt. Alternative Haftverminderungsschichten enthalten Polymer-Wachse, bevorzugt auf der Basis von Polyethylen.

In einer vorteilhaften Ausgestaltung einer erfindungsgemäßen Brandschutzscheibe ist zwischen der Zinnbadseite der Floatglasscheibe und der Schutzschicht mindestens eine weitere Schicht angeordnet, die beispielsweise die optischen Eigenschaften der Brandschutzscheibe beeinflusst. Eine derartige weitere Schicht erhöht beispielsweise die Transmission durch die Brandschutzscheibe, mindert Reflektionen oder gibt dem transmittierten Licht eine Färbung.

Die Schutzschicht ist vorteilhafterweise für elektromagnetische Strahlung, vorzugsweise elektromagnetische Strahlung einer Wellenlänge von 300 nm bis 1.300 nm, und insbesondere für sichtbares Licht, durchlässig. "Durchlässig" bedeutet, dass die Gesamttransmission durch die mit der Schutzschicht beschichtete Floatglasscheibe eine Transmission von mehr als 50 %, bevorzugt von mehr als 70 % und besonders bevorzugt von mehr als 90 % aufweist.

Die Erfindung umfasst des Weiteren eine Brandschutzverglasung, die mindestens
- eine erfindungsgemäße Brandschutzscheibe und
- eine zweite Floatglasscheibe mit einer Atmosphärenseite und einer Zinnbadseite umfasst,
wobei die zweite Floatglasscheibe über ihre Atmosphärenseite mit der Brandschutzschicht der Brandschutzscheibe flächig verbunden ist

Eine alternative Ausgestaltung einer erfindungsgemäßen Brandschutzverglasung umfasst mindestens
- eine erfindungsgemäße Brandschutzscheibe und
- eine zweite Floatglasscheibe mit einer Atmosphärenseite und einer Zinnbadseite, wobei die zweite Floatglasscheibe auf der Zinnbadseite eine zweite, erfindungsgemäße Schutzschicht aufweist und die zweite Floatglasscheibe über die zweite Schutzschicht mit der Brandschutzschicht der Brandschutzscheibe flächig verbunden ist.

In einer vorteilhaften Weiterbildung der erfindungsgemäßen Brandschutzverglasung ist die Atmosphärenseite der Floatglasscheibe der Brandschutzscheibe flächig mit einer zweiten Brandschutzschicht verbunden und die zweite Brandschutzschicht ist mit der Atmosphärenseite einer dritten Floatglasscheibe flächig verbunden.

In einer alternativen Weiterbildung der erfindungsgemäßen Brandschutzverglasung ist die Atmosphärenseite der Floatglasscheibe der Brandschutzscheibe flächig mit einer zweiten Brandschutzschicht verbunden und die zweite Brandschutzschicht ist über eine weitere Schutzschicht mit der Zinnbadseite einer dritten Floatglasscheibe.

Derartige Dreifachverglasungen zeigen eine besonders hohe Stabilität und Brandschutzwirkung. Es versteht sich, dass nach ähnlichem Prinzip auch Brandschutzscheiben mit vier oder mehr Floatglasscheiben herstellbar sind, wobei zur erfindungsgemäßen Vermeidung der Trübung der Durchsicht bei Alterung zwischen jeder Brandschutzschicht und der unmittelbar benachbart angeordneten Zinnbadseite einer Floatglasscheibe eine erfindungsgemäße Schutzschicht angeordnet ist. Unmittelbar benachbart angeordnet bedeutet hier, dass zwischen der Zinnbadseite und der Brandschutzschicht keine Glasscheibe vorhanden ist.

Die Erfindung umfasst des Weiteren eine Brandschutzverglasung aus einer Stapelfolge von einer ersten Floatglasscheibe, einer ersten Brandschutzschicht, einer zweiten Floatglasscheibe, einer zweiten Brandschutzschicht und einer abschließenden Floatglasscheibe, wobei zwischen jeder Zinnbadseite und einer unmittelbar benachbart angeordneten Brandschutzschicht, eine erfindungsgemäße Schutzschicht angeordnet ist.

In einer Weiterbildung dieser erfindungsgemäßen Brandschutzverglasung sind mindestens eine weitere Floatglasscheibe und eine weitere Brandschutzschicht innerhalb der Stapelfolge angeordnet. Es versteht sich, dass zwischen jeder Zinnbadseite einer weiteren Floatglasscheibe und einer unmittelbar benachbart angeordneten Brandschutzschicht, eine weitere erfindungsgemäße Schutzschicht angeordnet ist.

Zum Schutz der Brandschutzverglasung und insbesondere der Brandschutzschicht vor Wärme und UV-Strahlung können die Brandschutzverglasung und insbesondere die außenliegende Floatglasscheibe zusätzliche funktionelle Beschichtungen mit UV-und/oder Infrarot-reflektierender Wirkung aufweisen. Des Weiteren können mehrere Brandschutzverglasungen durch evakuierte oder gasgefüllte Zwischenräume eine Isolierverglasung bilden.

Die Erfindung umfasst ein Verfahren zur Herstellung einer Brandschutzverglasung, wobei mindestens:
a. eine Schutzschicht auf der Zinnbadseite einer ersten Floatglasscheibe aufgebracht wird,
b. die erste Floatglasscheibe und eine zweite Floatglasscheibe auf einen festen Abstand gehalten werden, so dass sich ein Formhohlraum zwischen der Zinnbadseite der ersten Floatglasscheibe und der zweiten Floatglasscheibe ausbildet und
c. eine Brandschutzschicht in flüssiger Form in den Formhohlraum eingegossen und ausgehärtet wird.

In einer vorteilhaften Ausführungsform des erfindungsgemäßen Verfahrens werden die Verfahrensschritte derart wiederholt, dass eine dritte Floatglasscheibe auf einem festen Abstand zu der ersten oder zweiten Floatglasscheibe gehalten wird und der dadurch gebildete Formhohlraum mit einer zweiten Brandschutzschicht gefüllt wird. Dieser Verfahrensschritt kann auch parallel erfolgen, das heißt, dass drei oder mehr Floatglasscheiben gleichzeitig auf einem Abstand gehalten werden und die Brandschutzschichten durch gleichzeitiges Eingießen der wässrigen Lösung des Silikates oder des Hydrogels gebildet werden. Es versteht sich, dass das Verfahren zur Ausbildung von Mehrscheiben-Brandverglasungen mit vier oder mehr Floatglasscheiben entsprechend wiederholt durchgeführt werden kann.

Das Aufbringen der Schutzschicht in Verfahrensschritt (a) kann durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der Floatglasscheibe.

Ein Verfahren zur Herstellung von Zinn-Zink-Mischoxid-Schichten durch reaktive Kathodenzerstäubung ist beispielsweise aus DE 198 48 751 C1 bekannt. Das Zinn-Zink-Mischoxid wird bevorzugt mit einem Target abgeschieden, welches von 5 Gew.-% bis 95 Gew.-% Zink, von 5 Gew.-% bis 95 Gew.-% Zinn und von 0 Gew.-% bis 10 Gew.-% Antimon sowie herstellungsbedingte Beimengungen enthält. Das Target enthält besonders bevorzugt von 15 Gew.-% bis 70 Gew.-% Zink, von 30 Gew.-% bis 85 Gew.-% Zinn und von 0 Gew.-% bis 5 Gew.-% Antimon sowie herstellungsbedingte Beimengungen anderer Metalle. Die Abscheidung des Zinn-Zinkoxids beziehungsweise des dotierten Zinn-Zinkoxids erfolgt beispielsweise unter Zugabe von Sauerstoff als Reaktionsgas während der Kathodenzerstäubung.

Die Metall-dotierten Siliziumnitridschichten werden ebenfalls beispielsweise durch reaktive Kathodenzerstäubung hergestellt, insbesondere durch Verwendung eines Metall-dotierten Silizium-Targets. Die Abscheidung der ersten Teilschutzschicht aus Metall-dotierten Siliziumnitrid erfolgt dann beispielsweise unter Zugabe von Stickstoff als Reaktionsgas während der Kathodenzerstäubung.

Die erste und/oder die zweite Teilschutzschicht kann alternativ durch Aufdampfen, chemische Gasphasenabscheidung (chemical vapour deposition, CVD), plasmagestützte Gasphasenabscheidung (PECVD), durch Sol-Gel-Verfahren oder durch nasschemische Verfahren aufgebracht werden.

In Verfahrensschritt (b) werden die erste Floatglasscheibe und eine zweite Floatglasscheibe auf einem festen Abstand gehalten, so dass sich ein Formhohlraum ausbildet. Dies kann beispielsweise durch Abstandshalter, die bevorzugt im Randbereich der Floatglasscheiben angeordnet werden, erfolgen. Die Abstandshalter können dabei als fester Bestandteil in der Brandschutzverglasung verbleiben oder wieder entfernt werden. Alternativ können die Floatglasscheiben durch äußere Halter in der Position fixiert werden.

In Verfahrensschritt (c) wird die noch nicht ausgehärtete, gießfähige Brandschutzschicht in den Formhohlraum eingegossen und im Folgenden ausgehärtet. Im Falle einer Brandschutzschicht aus einem wasserhaltigen Alkali-silikates wird beispielsweise ein Alkalisilikat mit einem Härter, welcher Siliziumdioxid enthält oder freisetzt, zusammengefügt. Die daraus gebildete gießfähige Masse wird in den Formhohlraum gegossen. Dort härtet die Masse unter Erhaltung des Wassergehalts zu einer festen Alkalisilikatschicht aus. Verfahren zur Herstellung einer Brandschutzschicht aus einem Hydrogel sind beispielsweise aus der WO 94/04355 oder der DE 40 01 677 C1 bekannt.

In einer vorteilhaften Weiterbildung des erfindungsgemäßen Verfahrens werden vor dem Verfahrensschritt (a) oder zwischen den Verfahrensschritten (a) und (b) die erste Floatglasscheibe und/oder die erste Floatglasscheibe sowie die zweite Floatglasscheibe thermisch vorgespannt oder teilvorgespannt.

Die Erfindung umfasst weiterhin die Verwendung einer erfindungsgemäßen Schutzschicht zwischen der Zinnbadseite einer Floatglasscheibe und einer Brandschutzschicht, insbesondere einer alkalischen Brandschutzschicht, zur Verminderung der Trübung der Floatglasscheibe bei Alterung.

Des Weiteren umfasst die Erfindung die Verwendung einer Brandschutzscheibe als Bauelement, als Raumteiler, als Teil einer Außenfassade oder eines Fensters in einem Gebäude oder in einem Fahrzeug zu Lande, zu Wasser oder in der Luft oder als Einbauteil in Möbeln und Geräten.

Die Erfindung wird nachfolgend anhand einer Zeichnung und eines Beispiels näher erläutert. Die Zeichnung ist nicht vollständig maßstabsgetreu. Die Erfindung wird durch die Zeichnung in keiner Weise eingeschränkt. Es zeigen:
- Figur 1:: eine schematische Querschnittsdarstellung einer erfindungsgemäßen Brandschutzscheibe,
- Figur 2A:: eine schematische Querschnittsdarstellung einer erfindungsgemäßen Brandschutzverglasung,
- Figur 2B:: eine schematische Querschnittsdarstellung eines alternativen Ausführungsbeispiels einer erfindungsgemäßen Brandschutzverglasung,
- Figur 3:: eine schematische Querschnittsdarstellung eines alternativen Ausführungsbeispiels einer erfindungsgemäßen Brandschutzverglasung,
- Figur 4A:: eine schematische Querschnittsdarstellung eines alternativen Ausführungsbeispiels einer erfindungsgemäßen Brandschutzverglasung,
- Figur 4B:: eine schematische Querschnittsdarstellung eines alternativen Ausführungsbeispiels einer erfindungsgemäßen Brandschutzverglasung,
- Figur 5:: ein Flussdiagramm eines Ausführungsbeispiels des erfindungsgemäßen Verfahrens und
- Figur 6:: ein Diagramm der Trübung von Brandschutzscheiben mit verschiedenen Schutzschichten.

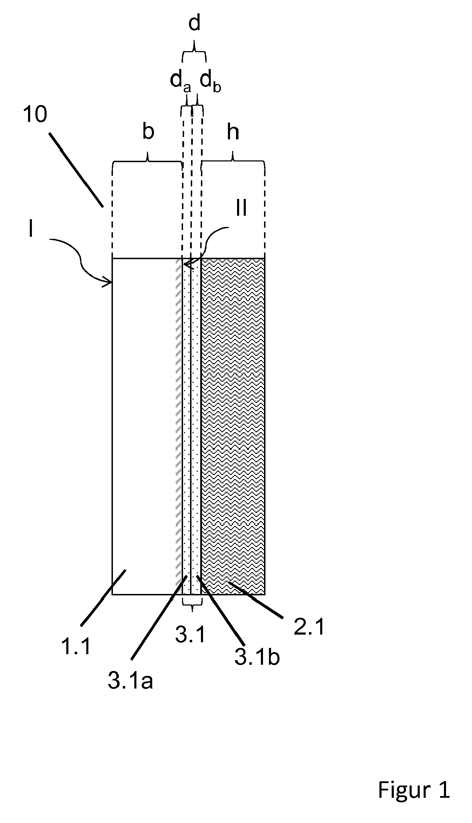

Figur 1 zeigt eine schematische Darstellung einer erfindungsgemäßen Brandschutzscheibe 10 in einem Querschnitt. Die Brandschutzscheibe 10 umfasst eine Floatglasscheibe 1.1 mit einer Atmosphärenseite I und einer Zinnbadseite II. Die Floatglasscheibe 1.1 hat beispielsweise eine Dicke b von 5 mm und Abmessungen von 2 m x 3 m. Es versteht sich, dass die Floatglasscheibe 1.1 auch andere, an den jeweiligen Verwendungszweck angepasste Dicken und Abmessungen haben kann.

Auf der Zinnbadseite II der Floatglasscheibe 1.1 ist flächig eine Schutzschicht 3.1 angeordnet. Auf der Schutzschicht 3.1 ist eine Brandschutzschicht 3.1 aus einem alkalischen Polysilikat angeordnet. Die Schutzschicht 3.1 erstreckt sich teilweise und bevorzugt im Wesentlichen vollständig über die gesamte Zinnbadseite II der Floatglasscheibe 1.1. Die Schutzschicht 3.1 erstreckt sich insbesondere über die vollständige Fläche zwischen der Brandschutzschicht 2.1 und der Floatglasscheibe 1.1. Dadurch kann sichergestellt werden, dass die Oberfläche der Zinnbadseite II der Floatglasscheibe 1.1 vor dem alkalischen Polysilikat der Brandschutzschicht 2.1 geschützt ist.

Die Schutzschicht 3.1 ist als eine zweilagige Schichtstruktur aus einer ersten Teilschutzschicht 3.1a und einer zweiten Teilschutzschicht 3.1 b ausgebildet.

Die erste Teilschutzschicht 3.1 a besteht beispielsweise aus einer Aluminium-dotierten Siliziumnitrid-Schicht und wurde durch Kathodenzerstäubung abgeschieden. Die Abscheidung erfolgte aus einem Target aus Aluminium-dotiertem Silizium unter Zugabe von Stickstoff als Reaktionsgas während der Kathodenzerstäubung Die Aluminium-dotierte Siliziumnitrid-Schicht hat beispielsweise einen Anteil des Dotierungsmetalls von 5 Gew.-% und eine Dicke dₐ von beispielsweise 8 nm.

Die zweite Teilschutzschicht 3.1b aus Antimon-dotiertem Zinn-Zinkoxid und wurde durch Kathodenzerstäubung abgeschieden. Das Target zur Abscheidung der zweiten Teilschutzschicht 3.1b enthielt 68 Gew.-% Zink, 30 Gew.-% Zinn und 2 Gew.-% Antimon. Die Abscheidung erfolgte unter Zugabe von Sauerstoff als Reaktionsgas während der Kathodenzerstäubung. Die zweite Teilschutzschicht 3.1b hat eine Dicke d_{b} von beispielsweise 15 nm und. Die Dicke d der gesamten Schutzschicht 3.1 beträgt somit 23 nm.

Wie Untersuchungen der Erfinder ergaben, konnte bereits mit einer Teilschutzschicht 3.1a aus Aluminium-dotiertem Siliziumnitrid, die eine Dicke dₐ von 3 nm aufwies, eine vorteilhaft erhöhte Alterungsbeständigkeit und eine stark verringerte Trübung sowie eine höhere Beständigkeit im Korrosionstest und im Kratzertest erzielt werden.

In diesem Ausgestaltungsbeispiel ist die Teilschutzschicht 3.1a aus Aluminium-dotiertem Siliziumnitrid unmittelbar auf der Zinnbadseite II der Floatglasscheibe 1.1 angeordnet und die zweite Teilschutzschicht 3.1 b aus Antimon-dotiertem Zinn-Zinkoxid auf der ersten Teilschutzschicht 3.1a aus Aluminium-dotiertem Siliziumnitrid angeordnet. Es versteht sich, dass die Reihenfolge der Materialien auch vertauscht sein kann, so dass eine Schicht aus Antimon-dotiertem Zinn-Zinkoxid unmittelbar auf der Zinnbadseite der Floatglasscheibe angeordnet ist und eine Schicht aus Aluminium-dotiertem Siliziumnitrid auf der Schicht aus Antimon-dotiertem Zinn-Zinkoxid angeordnet ist.

Die Brandschutzschicht 2.1 enthält beispielsweise ein ausgehärtetes Polysilikat, welches aus einem Alkalisilikat und mindestens einem Härter gebildet wird, beispielsweise aus Kaliumsilikat und kolloidaler Kieselsäure. In einer alternativen Ausgestaltung kann das Kaliumsilikat auch direkt aus Kalilauge und Siliziumdioxid hergestellt werden. Im Polysilikat beträgt das Molverhältnis von Siliziumdioxid und Kaliumoxid (SiO₂:K₂O) beispielsweise 4,7:1. Eine derartige Brandschutzschicht 2.1 ist typischerweise alkalisch mit einem pH-Wert von 12. Die Dicke h der Brandschutzschicht 2.1 beträgt beispielsweise 3 mm.

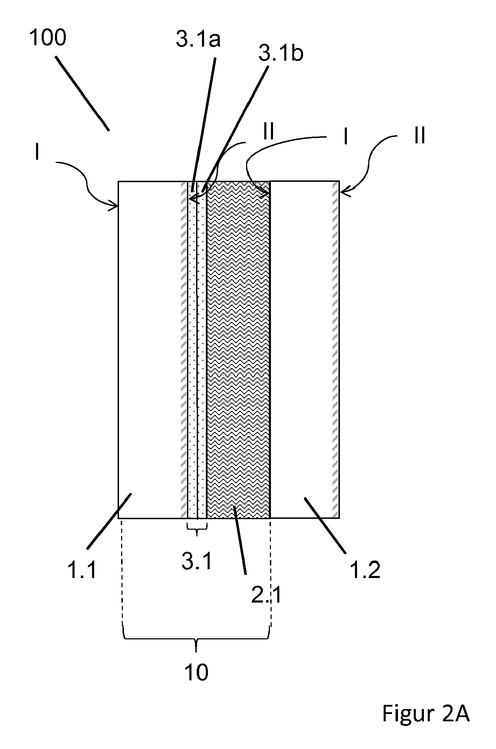

Figur 2A zeigt eine schematische Querschnittsdarstellung einer erfindungsgemäßen Brandschutzverglasung 100. Die erfindungsgemäße Brandschutzverglasung 100 umfasst beispielsweise eine erfindungsgemäße Brandschutzscheibe 10, wie sie in Figur 1 beschrieben ist. Des Weiteren ist die Brandschutzschicht 2.1 der Brandschutzscheibe 10 auf der der Schutzschicht 3.1 gegenüberliegenden Seite mit der Atmosphärenseite I einer zweiten Floatglasscheibe 1.2 flächig verbunden. Die zweite Floatglasscheibe 1.2 entspricht in ihrer Beschaffenheit beispielsweise der Floatglasscheibe 1.1.

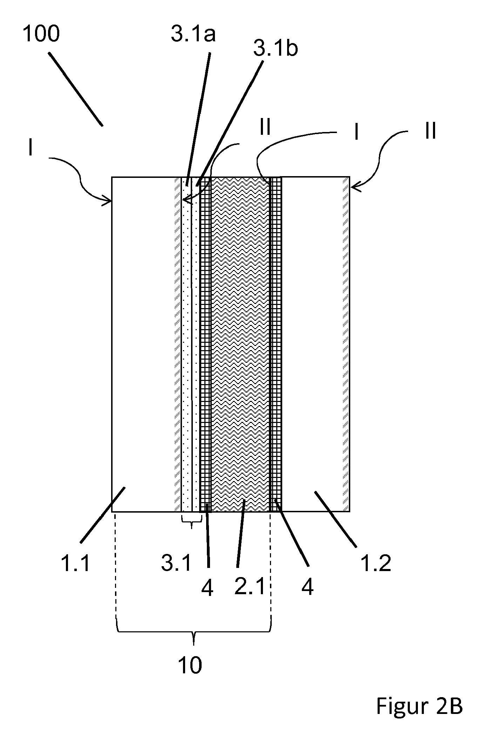

Figur 2B zeigt eine schematische Querschnittsdarstellung eines alternativen Ausführungsbeispiels einer erfindungsgemäßen Brandschutzverglasung 100. Die erfindungsgemäße Brandschutzverglasung 100 entspricht derjenigen aus Figur 2A. Zur Verbesserung der Eigenschaften im Brandfalle ist zwischen der Schutzschicht 3.1 und der Brandschutzschicht 2.1 sowie zwischen der Brandschutzschicht 2.1 und der zweiten Floatglasscheibe 1.2 eine Haftverminderungsschicht 4 angeordnet. Die Haftverminderungsschicht 4 enthält beispielsweise ein organofunktionelles Silan mit hydrophober Wirkung. Die Haftverminderungsschicht 4 hat den besonderen Vorteil, dass sich im Brandfall beim Zerbrechen der Floatglasscheibe 1.1,1.2 die einzelnen Bruchstücke von der Brandschutzschicht 3.1 lösen können, ohne dass der Zusammenhang der Brandschutzschicht 3.1 verloren geht.

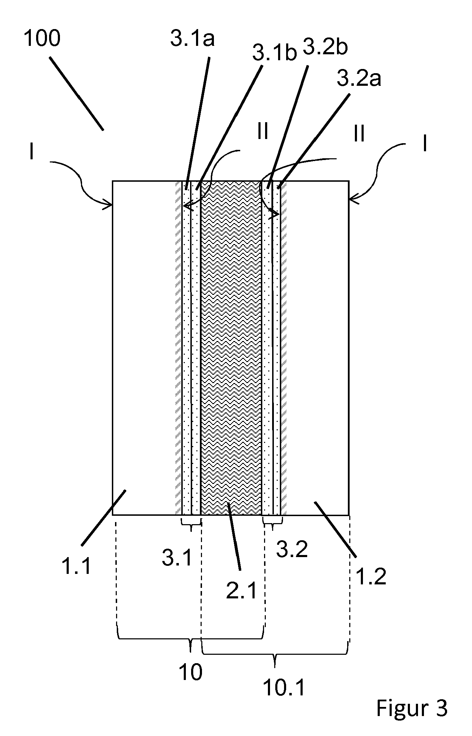

Figur 3 zeigt eine schematische Querschnittsdarstellung eines alternativen Ausführungsbeispiels einer erfindungsgemäßen Brandschutzverglasung 100. Die erfindungsgemäße Brandschutzverglasung 100 umfasst beispielsweise eine erfindungsgemäße Brandschutzscheibe 10, wie sie in Figur 1 beschrieben ist. Des Weiteren ist die Brandschutzschicht 2.1 der Brandschutzscheibe 10 auf der der Schutzschicht 3.1 gegenüberliegenden Seite über eine zweite Schutzschicht 3.2 mit der Zinnbadseite II einer zweiten Floatglasscheibe 1.2 flächig verbunden. Die zweite Floatglasscheibe 1.2 und die zweite Schutzschicht 3.2 bilden mit der Brandschutzschicht 2.1 wiederum eine erfindungsgemäße Brandschutzscheibe 10.1. Da sowohl die Zinnbadseite II der Floatglasscheibe 1.1 als auch die Zinnbadseite II der zweiten Floatglasscheibe 1.2 durch eine Schutzschicht 3.1,3.2 von der Brandschutzschicht 2.1 getrennt sind, wird erfindungsgemäß eine Trübung der Durchsicht durch die Brandschutzverglasung 100 bei Alterung vermieden.

Sowohl die erste Schutzschicht 3.1 als auch die zweite Schutzschicht 3.2 bestehen aus zweilagigen Schichtstrukturen, wobei eine erste Teilschutzschicht 3.1a, 3.2a beispielsweise Aluminium-dotiertes Siliziumnitrid enthält und jeweils direkt auf der Zinnbadseite II der Floatglasscheiben 1.1, 1.2 angeordnet ist und eine zweite Teilschutzschicht 3.1b, 3.2.b aus beispielsweise Antimon-dotiertem Zinn-Zinkoxid zwischen den ersten Teilschutzschichten 3.1a, 3.2a und der Brandschutzschicht 2.1 angeordnet ist.

Eine derartige Brandschutzverglasung 100 ist für eine eigenständige Verwendung als Bauelement in einem Gebäude oder als Fahrzeugverglasung geeignet.

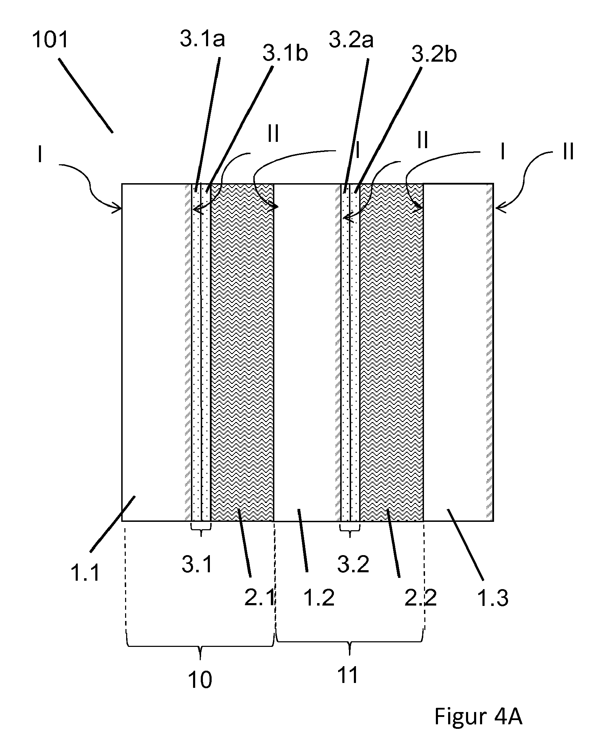

Figur 4A zeigt eine schematische Querschnittsdarstellung eines alternativen Ausführungsbeispiels einer erfindungsgemäßen Brandschutzverglasung 101, am Beispiel einer Dreifachverglasung mit drei Floatglasscheiben 1.1,1.2,1.3 und zwei Brandschutzschichten 2.1,2.2. Die erfindungsgemäße Brandschutzverglasung 101 umfasst beispielsweise eine erfindungsgemäße Brandschutzscheibe 10, wie sie in Figur 1 beschrieben ist mit eine zweilagigen Schutzschicht 3.1 aus einer ersten Teilschutzschicht und einer zweiten Teilschutzschicht. Des Weiteren ist die Brandschutzschicht 2.1 der Brandschutzscheibe 10 auf der der Schutzschicht 3.1 gegenüberliegenden Seite mit der Atmosphärenseite I einer zweiten Floatglasscheibe 1.2 flächig verbunden. Die zweite Floatglasscheibe 1.2 weist an ihrer Zinnbadseite II eine zweite Schutzschicht 3.2 auf und ist über diese mit einer zweiten Brandschutzschicht 2.2 verbunden. Die zweite Floatglasscheibe 1.2, die Schutzschicht 3.2 und die Brandschutzschicht 2.2 bilden wiederum eine erfindungsgemäße Brandschutzscheibe 11. Die der zweiten Schutzschicht 3.2 abgewandten Seite der zweiten Brandschutzschicht 2.2 ist mit der Atmosphärenseite I einer dritten Floatglasscheibe 1.3 verbunden.

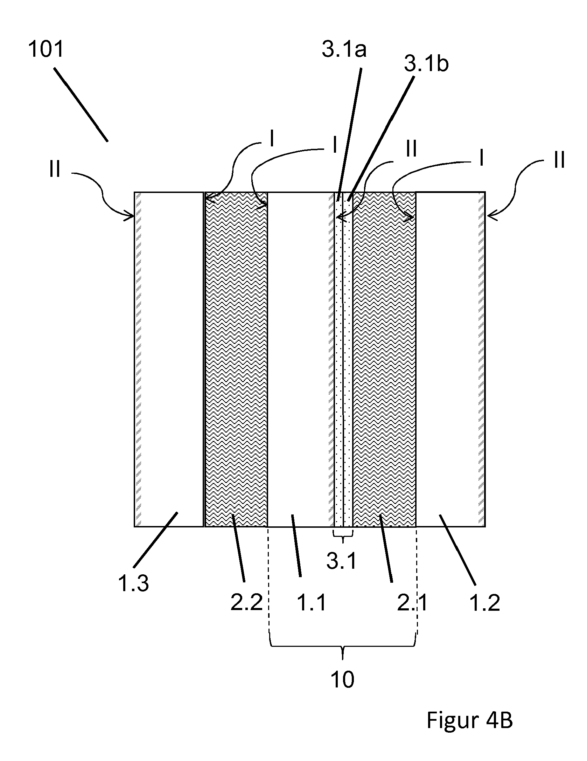

Figur 4B zeigt ein alternatives Ausführungsbeispiel einer erfindungsgemäßen Brandschutzverglasung 101. Die Brandschutzschicht 2.1 einer erfindungsgemäßen Brandschutzscheibe 10 ist mit der Atmosphärenseite I einer zweiten Floatglasscheibe 1.2 flächig verbunden. Des Weiteren ist die Atmosphärenseite I der Floatglasscheibe 1.1 mit einer zweiten Brandschutzschicht 2.2 flächig verbunden. Die zweite Brandschutzschicht 2.2 ist flächig mit der Atmosphärenseite I einer dritten Floatglasscheibe 1.3 flächig verbunden. Dieses Ausführungsbeispiel hat den besonderen Vorteil, dass nur eine erfindungsgemäße Schutzschicht 3.1 benötigt wird um eine alterungsbeständige Brandschutzverglasung 101 herzustellen, da durch eine geeignete Anordnung der außenliegenden Floatglasscheiben 1.2,1.3 nur die Zinnbadseite II der Floatglasscheibe 1.1 unmittelbar benachbart und ohne Trennung durch Glas zu einer Brandschutzschicht 2.1 angeordnet ist.

Die in den Figuren 4A und 4B dargestellten Dreifachverglasungen zeigen eine besonders hohe Stabilität und Brandschutzwirkung. Es versteht sich, dass nach ähnlichem Prinzip auch Brandschutzscheiben mit vier oder mehr Floatglasscheiben herstellbar sind, wobei zur erfindungsgemäßen Vermeidung der Trübung der Durchsicht bei Alterung zwischen jeder Brandschutzschicht und der unmittelbar benachbart angeordneten Zinnbadseite einer Floatglasscheibe eine erfindungsgemäße Schutzschicht angeordnet ist.

Die Brandschutzscheibe 10,11 und die Brandschutzverglasung 100,101 aus den hier dargestellten Ausführungsbeispielen können weitere, an sich bekannte und hier nicht dargestellte Abstandshalter zwischen den benachbarten Floatglasscheiben 1.1,1.2,1.3 und Randversiegelungen um die Brandschutzschichten 2.1,2.2 enthalten. Geeignete Materialien für die Randversiegelung enthalten beispielsweise Polyisobuthylen als Abstandhalter und Polysulfid, Polyurethan oder Silikon als Randverklebung

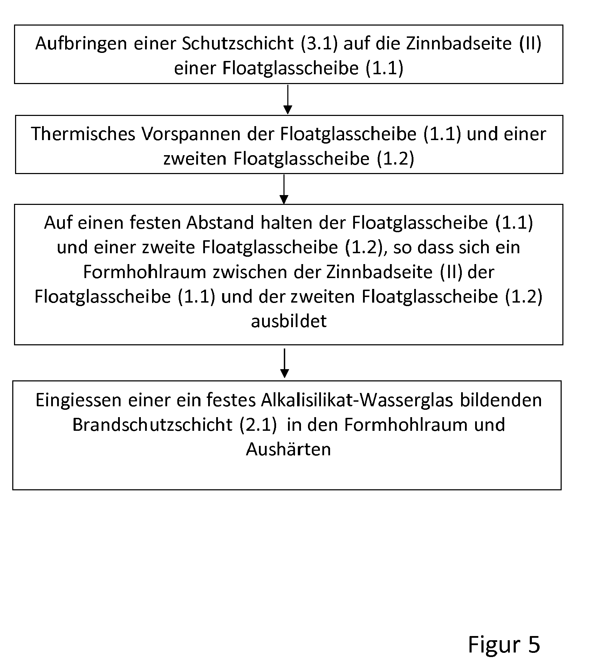

Figur 5 zeigt ein Flussdiagramm eines Ausführungsbeispiels des erfindungsgemäßen Verfahrens zur Herstellung einer erfindungsgemäßen Brandschutzverglasung 100 nach Figur 2.

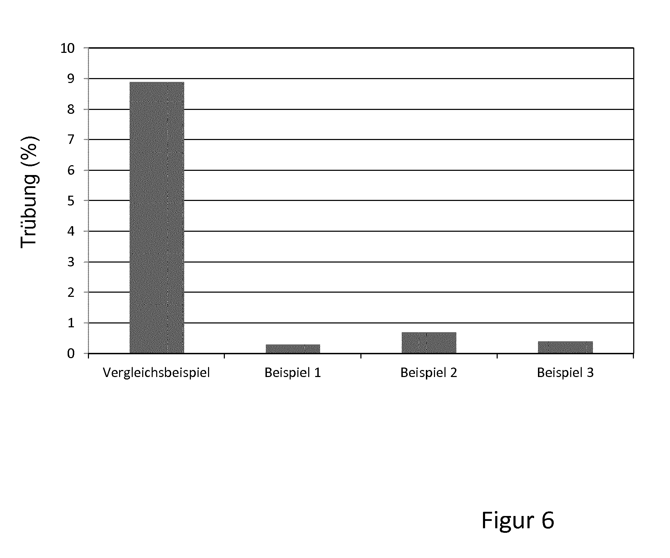

Figur 6 zeigt ein Diagramm der Trübung in einem Alterungstest von Brandschutzscheiben 10 mit verschiedenen Schutzschichten aus Einzelschichten. Im beschleunigten Alterungstest wurde die jeweilige Floatglasscheibe über eine Zeitdauer von 4 Stunden und bei einer Temperatur von 80°C in eine wässrige Lösung aus Kaliumsilikat getaucht. Die wässrige Kaliumsilikat-Lösung ist der alkalische Anteil bei der Herstellung einer erfindungsgemäßen Brandschutzschicht aus einem Alkali-Polysilikat-Hydrogel. Die Trübung wurde mit einem Trübungsmessgerät vom Typ "haze-gard plus" der Firma BYK-Gardner gemessen.

Beispiel 1 ist eine Floatglasscheibe, deren Zinnbadseite II mit einer Schutzschicht aus einer einzelnen Zinn-Zinkoxid-Schicht beschichtet wurde. Dabei betrug das Verhältnis von Zinn zu Zink gleich 50 Gew.-%:50 Gew.-%. Die Dicke d der Schutzschicht betrug 25 nm. Nach dem Alterungstest wurde eine Trübung von 0,3 % gemessen.

Beispiel 2 ist eine Floatglasscheibe, deren Zinnbadseite II mit einer Schutzschicht aus einer einzelnen Zinkoxid-Schicht beschichtet war. Die Dicke d der Schutzschicht betrug 25 nm. Nach dem Alterungstest wurde eine Trübung von 0,7 % gemessen.

Beispiel 3 ist eine Floatglasscheibe, deren Zinnbadseite II mit einer Schutzschicht aus einer einzelnen Indium-Zinnoxid (ITO)-Schicht beschichtet war. Dabei betrug das Verhältnis von Indium zu Zinn gleich 90 Gew.-%:10 Gew.-%. Die Dicke d der Schutzschicht betrug 25 nm. Nach dem Alterungstest wurde eine Trübung von 0,4 % gemessen.

Das Vergleichsbeispiel war eine Floatglasscheibe, bei der weder Atmosphärenseite I noch Zinnbadseite II beschichtet wurden und somit beide Seiten der wässrigen Lösung aus Kaliumsilikat ausgesetzt waren. Nach dem Alterungstest wurde beim Vergleichsbeispiel eine Trübung von 8,9 % gemessen.

Bei den dargestellten Alterungstests waren die Atmosphärenseiten I der Floatglasscheiben der Beispiele 1 bis 3 und des Vergleichsbeispiels nicht durch eine Schutzschicht geschützt und somit der wässrigen Lösung aus Kaliumsilikat unmittelbar ausgesetzt. Daraus lässt sich folgern, dass die Trübung im Wesentlichen durch den Kontakt der Zinnbadseite II mit der wässrigen Lösung aus Kaliumsilikat bewirkt wird.

Jede der Schutzschichten aus den Beispielen 1 bis 3 vermindert die Trübung der Floatglasscheibe im Vergleich zum Vergleichsbeispiel ohne Schutzschicht auf Werte < 1%. Bei der Schutzschicht aus einer einzelnen Zinn-Zinkoxid-Schicht nach Beispiel 1 wurde die Trübung sogar um das 89-fache vermindert. Dieses Ergebnis war für den Fachmann unerwartet und überraschend.

Noch bessere Ergebnisse lassen sich für erfindungsgemäße Brandschutzscheiben 10 mit Schutzschichten 3.1 mit einer zwei oder mehrlagigen Schichtstruktur erzielen.

In Tabelle 1 sind die Ergebnisse von Alterungstests und Trübungstests für verschiedene Ausführungsbeispiele erfindungsgemäßer Brandschutzscheiben 10 mit Vergleichsbeispielen zusammenfassend dargestellt

**Tabelle 1**

| Schichtaufbau | Scheiben- bzw. Schichtdicke(n) | Korrosionstest | Trübunqstest | Kratzertest |
|---|---|---|---|---|
| Floatglasscheibe/ Sb:Zinn-Zinkoxid | 4 mm/ 15 nm | gut | gut | viele |
| Floatglasscheibe/ Al:Siliziumnitrid | 4 mm/ 8 nm | gut | befriedigend | wenige |
| Floatglasscheibe(1.1)/ Sb:Zinn-Zinkoxid(3.1 b)/ Al:Siliziumnitrid(3.1a) | 4 mm(1.1)/ 15 nm(3.1 b)/ 8 nm(3.1 a) | befriedigend | gut | wenige |
| Floatglasscheibe/ B:Siliziumnitrid/ Sb:Zinn-Zinkoxid | 4 mm/ 8 nm/ 15 nm | gut | sehr gut | wenige |
| Floatglasscheibe(1.1)/ Al:Siliziumnitrid (3.1a)/ Sb:Zinn-Zinkoxid (3.1 b) | 4 mm(1.1)/ 8 nm (3.1a)/ 15 nm (3.1b) | sehr gut | sehr gut | nahezu keine |

Für den Korrosionstest, den Kratzertest und den Trübungstest wurde eine Brandschutzverglasung untersucht. Zur Herstellung der Brandschutzverglasung wurde eine Brandschutzscheibe 10 aus einer Floatglasscheibe 1.1 mit einer Schutzschicht 3.1 auf der Zinnbadseite II und einer alkalischen Brandschutzschicht 2.1 mit der Atmosphärenseite I einer weiteren Floatglasscheibe 1.2 verbunden.

Im Korrosionstest und im Kratzertest wurde die jeweilige Brandschutzverglasung über eine Zeitdauer von 14 Tagen bei einer Temperatur von 80° C gelagert. Anschließend wurde die Brandschutzverglasung im Korrosionstest visuell auf streifenförmige Trübungen überprüft, wobei die Streifen in Produktionsrichtung der Floatglasscheibe orientiert sind. Derartige streifenförmige Trübungen lassen auf eine Interaktion der Brandschutzschicht mit der Zinnbadseite II des Floatglases 1.1 rückschließen. "Sehr gut" bedeutet, dass nahezu keine streifenförmigen Trübungen in Produktionsrichtung zu erkennen sind, "befriedigend" bedeutet, dass vergleichsweise viele streifenförmige Trübungen zu erkennen sind.

Des Weiteren wurde die Brandschutzverglasung im Kratzertest visuell auf willkürlich orientierte Kratzer untersucht. Derartige Kratzer ergeben sich produktionsbedingt auf der Zinnbadseite II der Floatglasscheibe 1.1. "Sehr gut" bedeutet, dass nahezu keine willkürlich orientierten Kratzer zu erkennen sind, "befriedigend" bedeutet, dass vergleichsweise viele willkürlich orientierte Kratzer zu erkennen sind.

Im Trübungstest wurde die jeweilige Brandschutzverglasung über eine Zeitdauer von 1 Jahr bei einer Temperatur von 60° C gelagert. Die Trübung wurde mit einem Trübungsmessgerät vom Typ "haze-gard plus" der Firma BYK-Gardner gemessen und gibt die homogenen Eintrübung der Brandschutzverglasung wieder. "Sehr gut" bedeutet hier eine sehr geringe Trübung und "befriedigend" eine stärkere Trübung.

In der ersten Spalte von Tabelle 1 ist das Material der Schutzschicht und in der zweiten Spalten deren (Schicht-)Dicke angegeben. Die Schutzschichten sind jeweils unmittelbar auf der Zinnbadseite II Floatglasscheibe 1.1 angeordnet. Die Angabe Al:Siliziumnitrid (3.1 a)/Sb:Zinn-Zinkoxid (3.1 b) beschreibt eine erfindungsgemäße Schutzschicht 3.1 und gibt beispielsweise an, dass die Schutzschicht 3.1 aus einer zweilagigen Schichtstruktur besteht. Dabei ist die zuerst genannte erste Teilschutzschicht 3.1a aus Aluminium-dotiertem Siliziumnitrid unmittelbar auf der Floatglasscheibe 1.1 angeordnet und die zweite Teilschutzschicht 3.1b aus Antimon-dotiertem Zinn-Zinkoxid zwischen der ersten Teilschutzschicht 3.1a und der Brandschutzschicht 2.1 angeordnet. Für die erfindungsgemäße Schichtfolge Sb:Zinn-Zinkoxid(3.1b)/Al:Siliziumnitrid(3.1a) gilt entsprechend die umgekehrte Reihenfolge.

Die in der Tabelle wiedergegebenen Tendenzen lassen sich im Rahmen eines überraschenden Modells verstehen: Eine einzelne Antimon-dotierte Zinn-Zinkoxid-Schicht wirkt als Schutzschicht der Zinnbadseite II der Floatglasscheibe 1.1 und schützt diese effektiv vor dem alkalischen Angriff der Brandschutzschicht 2.1. Dies führt zu guten Ergebnissen im Korrosionstest und einer nur geringen Eintrübung im Trübungstest. Da die Antimon-dotierte Zinn-Zinkoxid-Schicht aber relativ weich ist, treten während der Produktion eine Vielzahl von willkürlich orientierten Kratzern auf, die im Kratzertest das Erscheinungsbild der Brandschutzverglasung beeinträchtigen.

Eine einzelne relativ harte Aluminium-dotierte Siliziumnitrid-Schicht führt ebenfalls im Korrosionstest zu guten Ergebnissen und zu wenigen streifenförmigen Trübungen. Allerdings weist eine einzelne Aluminium-dotierte Siliziumnitrid-Schicht nur eine befriedigende Schutzwirkung im Langzeit-Trübungstest auf.

Eine erfindungsgemäße Schutzschicht 3.1 aus einer zweiten Teilschutzschicht 3.1b aus Antimon-dotiertem Zinn-Zinkoxid unmittelbar auf der Zinnbadseite II der Floatglasscheibe 1.1 und einer ersten Teilschutzschicht 3.1a aus Aluminium-dotiertem Siliziumnitrid zwischen zweiter Teilschutzschicht 3.1 b und Brandschutzschicht 2.1 zeigt gute Ergebnisse im Trübungstest und im Kratzertest, aber nur befriedigende Ergebnisse im Korrosionstest.

Eine Schutzschicht 3.1 aus einer ersten Teilschutzschicht 3.1a aus Bor-dotiertem Siliziumnitrid unmittelbar auf der Zinnbadseite II der Floatglasscheibe 1.1 und einer zweiten Teilschutzschicht 3.1b aus antimondotierten Zinn-Zinkoxid zwischen erster Teilschutzschicht 3.1a und Brandschutzschicht 2.1 zeigt sehr gute Ergebnisse im Trübungstest und im Kratzertest wenige Kratzer. Allerdings sind eine Vielzahl von streifenförmigen Trübungen im Korrosionstest feststellbar.

Die besten Ergebnisse liefern überraschenderweise erfindungsgemäße Schutzschichten 3.1 aus einer ersten Teilschutzschicht 3.1a aus Aluminium-dotiertem Siliziumnitrid unmittelbar auf der Zinnbadseite II der Floatglasscheibe 1.1 und einer zweiten Teilschutzschicht 3.1b aus antimondotierten Zinn-Zinkoxid zwischen erster Teilschutzschicht 3.1 a und Brandschutzschicht 2.1. Diese Schutzschichten 3.1 zeigten in allen drei Test die besten Ergebnisse.

Besonders auffällig ist dabei, dass eine erfindungsgemäße erste Teilschutzschicht 3.1a aus Aluminium-dotiertem Siliziumnitrid in Kombination mit der zweiten Teilschutzschicht 3.1b aus Antimon-dotierten Zinn-Zinkoxid sowohl im Korrosionstest als auch im Kratzertest deutlich bessere Ergebnisse zeigt, als mit einer ersten Teilschutzschicht aus Bor-dotiertem Siliziumnitrid. Dies lässt sich durch die größere Härte von Metall-dotierten Siliziumnitrid-Schichten 3.1a und hier insbesondere von Aluminium-dotierten Siliziumnitrid-Schichten 3.1a im Vergleich mit nicht-Metall-dotierten Siliziumnitrid-Schichten und hier insbesondere mit Bor-dotierten Siliziumnitrid-Schichten erklären. Die härteren Metall-dotierten Siliziumnitrid-Schichten 3.1a zeigen in Kombination mit den zweiten Teilschutzschichten 3.1b aus Antimon-dotiertem Zinn-Zinkoxid in allen drei Tests die besten Ergebnisse.

Dieses Ergebnis war für den Fachmann unerwartet und überraschend.

### Bezugszeichenliste

- 1,1.1,1.2,1.3: Floatglasscheibe
- 2.1,2.2: Brandschutzschicht
- 3.1,3.2,3.3: Schutzschicht
- 3.1a, 3.2a: erste Teilschutzschicht
- 3.1b, 3.2b: zweite Teilschutzschicht
- 4: Haftverminderungsschicht
- 10,10.1,11: Brandschutzscheibe
- 100,101: Brandschutzverglasung

- I: Atmosphärenseite einer Floatglasscheibe
- II: Zinnbadseite einer Floatglasscheibe

- b: Dicke einer Floatglasscheibe
- d,dₐ,d_{b}: Dicke einer Schutzschicht
- h: Dicke einer Brandschutzschicht

## Patentansprüche

1. Brandschutzscheibe (10), umfassend:
- mindestens eine Floatglasscheibe (1.1) mit einer Atmosphärenseite (I) und einer Zinnbadseite (II),
- mindestens eine Schutzschicht (3.1), die auf der Atmosphärenseite (I) und/oder der Zinnbadseite (II) flächig angeordnet ist und
- mindestens eine Brandschutzschicht (2.1), die auf der Schutzschicht (3.1) flächig angeordnet ist,
wobei die Schutzschicht (3.1) eine mehrlagige Schichtstruktur ist und eine erste Teilschutzschicht (3.1a) aus Metall-dotiertem Siliziumnitrid, und eine zweite Teilschutzschicht (3.1b) aus einem Zinn-Zinkoxid oder einem dotierten Zinn-Zinkoxid, enthält oder daraus besteht.

2. Brandschutzscheibe (10) nach Anspruch 1, wobei die Schutzschicht (3.1) eine zweilagige Schichtstruktur ist.

3. Brandschutzscheibe (10) nach Anspruch 1 oder 2, wobei die erste Teilschutzschicht (3.1a) unmittelbar auf der Floatglasscheibe (1.1) angeordnet ist und die zweite Teilschutzschicht (3.1 b) zwischen der ersten Teilschutzschicht (3.1a) und der Brandschutzschicht (2.1) angeordnet ist.

4. Brandschutzscheibe (10) nach einem der Ansprüche 1 bis 3, wobei die Schutzschicht (3.1) nur auf der Zinnbadseite (II) der Floatglasscheibe (1.1) flächig angeordnet ist.

5. Brandschutzscheibe (10) nach einem der Ansprüche 1 bis 4, wobei die Brandschutzschicht (2.1) alkalisch ist.

6. Brandschutzscheibe (10) nach einem der Ansprüche 1 bis 5, wobei die Brandschutzschicht (2.1) Alkalisilikat, Alkalisilikat-Wasserglas, Alkaliphosphat, Alkaliwolframat, Alkalimolydat und/oder Gemische oder Schichtverbindungen davon, bevorzugt Alkali-Polysilikat, Alkali-Polyphosphat, Alkali-Polywolframat, Alkali-Poylmolydat und/oder Gemische oder Schichtverbindungen davon, enthält und das Alkali-Element bevorzugt Natrium, Kalium, Lithium und/oder Gemische davon ist, oder die Brandschutzschicht (2.1) ein Hydrogel aus vernetzten Monomeren und/oder Polymeren, bevorzugt Polyacrylamid, Poly-N-Methyloacrylamid oder polymerisiertes 2-Hydroxy-3-methacryloxypropyltrimethylammonium-chlorid, enthält.

7. Brandschutzscheibe (10) nach einem der Ansprüche 1 bis 6, wobei der Anteil des Dotierungsmetalls an der ersten Teilschutzschicht (3.1a) von 1 Gew.-% bis 20 Gew.-%, und bevorzugt von 3 Gew.-% bis 7 Gew.-% beträgt und/oder das Dotierungsmetall der ersten Teilschutzschicht (3.1a) Aluminium ist.

8. Brandschutzscheibe (10) nach einem der Ansprüche 1 bis 7, wobei die erste Teilschutzschicht (3.1a) eine Dicke dₐ von 5 nm bis 50 nm und bevorzugt von 8 nm bis 13 nm aufweist.

9. Brandschutzscheibe (10) nach einem der Ansprüche 1 bis 8, wobei in der zweiten Teilschutzschicht (3.1b) das Verhältnis von Zink:Zinn von 5 Gew.-%: 95 Gew.-% bis 95 Gew.-% :5 Gew.-% und bevorzugt von 15 Gew.-%: 85 Gew.-% bis 70 Gew.-%: 30 Gew.-% beträgt.

10. Brandschutzscheibe (10) nach einem der Ansprüche 1 oder 9, wobei die zweite Teilschutzschicht (3.1b) mindestens ein Dotierelement, bevorzugt Antimon, Fluor, Bor, Silber, Ruthenium, Palladium, Aluminium und Tantal enthält und der Anteil des Dotierelements an der zweiten Teilschutzschicht (3.1b) von 0,1 Gew.-% bis 5 Gew.-%, und bevorzugt von 0,5 Gew.-% bis 2,5 Gew.-% beträgt.

11. Brandschutzscheibe (10) nach einem der Ansprüche 1 bis 10, wobei die zweite Teilschutzschicht (3.1b) eine Dicke d_{b} von 10 nm bis 50 nm und bevorzugt von 13 nm bis 21 nm aufweist.

12. Brandschutzscheibe (10) nach einem der Ansprüche 1 bis 11, wobei die Floatglasscheibe (1.1) Boro-Silikatglas, Alumo-Silikatglas, Erdalkali-Silikatglas oder Kalk-Natron-Glas und bevorzugt Kalk-Natron-Glas gemäß EN 572-1:2004 enthält und/oder die Floatglasscheibe (1.1) thermisch vorgespannt oder teilvorgespannt ist, und/oder die Floatglasscheibe (1.1) eine Dicke b von 1 mm bis 25 mm und bevorzugt von 2 mm bis 12 mm aufweist und/oder die Brandschutzschicht (3.1) eine Dicke h von 0,5 mm bis 70 mm aufweist.

13. Brandschutzverglasung (100,101) mindestens umfassend:
- eine Brandschutzscheibe (10) nach einem der Ansprüche 1 bis 12 und
- eine Floatglasscheibe (1.2) mit einer Atmosphärenseite (I) und einer Zinnbadseite (II),
wobei
- die Atmosphärenseite (I) oder
- die Zinnbadseite (II) über eine Schutzschicht (3.2),
mit der Brandschutzschicht (2.1) der Brandschutzscheibe (10) flächig verbunden ist.

14. Brandschutzverglasung (101) nach Anspruch 13, wobei die Atmosphärenseite (I) der Floatglasscheibe (1.1) der Brandschutzscheibe (10) flächig mit einer Brandschutzschicht (2.2) verbunden ist und die Brandschutzschicht (2.2) mit der Atmosphärenseite (I) oder über eine weitere Schutzschicht (3.3) mit der Zinnbadseite (II) einer dritten Floatglasscheibe (1.3) flächig verbunden ist.

15. Brandschutzverglasung (101) nach Anspruch 13 oder 14, wobei die Floatglasscheibe (1.1) oder die Floatglasscheibe (1.2) mit mindestens einer Stapelfolge aus einer weiteren Brandschutzschicht (2.2) und einer weiteren Floatglasscheibe (1.3) flächig verbunden ist, wobei zwischen jeder Zinnbadseite (II) und einer unmittelbar benachbart angeordneten Brandschutzschicht (2.2), eine weitere erfindungsgemäße Schutzschicht (3.2) angeordnet ist.

16. Verfahren zur Herstellung einer Brandschutzverglasung (100,101), wobei mindestens:
a. eine Schutzschicht (3.1) auf der Zinnbadseite (II) einer Floatglasscheibe (1.1) aufgebracht wird,
b. die Floatglasscheibe (1.1) und eine zweite Floatglasscheibe (1.2) thermisch vorgespannt oder teilvorgespannt werden,
c. die Floatglasscheibe (1.1) und die zweite Floatglasscheibe (1.2) auf einen festen Abstand gehalten werden, so dass sich ein Formhohlraum zwischen der Zinnbadseite (II) der Floatglasscheibe (1.1) und der zweiten Floatglasscheibe (1.2) ausbildet und
d. eine Brandschutzschicht (2.1) in den Formhohlraum eingegossen und ausgehärtet wird.

17. Verfahren nach Anspruch 16, wobei die Verfahrensschritte mindestens einmal mit einer weiteren Floatglasscheibe (1.3) und einer weiteren Brandschutzschicht (2.2) wiederholt werden.

18. Verwendung einer Schutzschicht (3.1) zwischen einer Zinnbadseite (II) einer Floatglasscheibe (1.1) und einer Brandschutzschicht (2.1) nach einem der Ansprüche 1 bis 12 zur Verminderung der Trübung der Floatglasscheibe (1.1) bei Alterung.
